# EUROPÄISCHE PATENTANMELDUNG

(11) **EP 0 532 887 A2**
(43) Veröffentlichungstag der Anmeldung: **24.03.1993**
(21) Anmeldenummer: 92113361.7
(22) Anmeldetag: 05.08.1992
(51) Int. Cl.: F16L 5/02, H02G 3/22, A62C 2/06

(54) **Vorrichtung zur Brandabschottung einer Wandöffnung für die Durchführung von Leitungen**

(30) Priorität: 19.09.1991 DE 4131148
(71) Anmelder: Hauff, Werner, D-89561 Dischingen (DE)
(72) Erfinder: Hauff, Werner, D-89561 Dischingen (DE)
(74) Vertreter: Fay, Hermann, Dipl.-Phys. Dr.

(57) **Zusammenfassung**

Die Vorrichtung umfaßt einen abgedichtet abgedichtet gegen die Wand (3) in der Wandöffnung (2) angeordneten, die Leitungen (1) in einer Durchführungsöffnung (7) aufnehmenden Schottkasten (4), in dem sich Intumeszenzmaterial befindet, das die Durchführungsöffnung (7) erst im Brandfall ausfüllt und dabei sein ursprüngliches Volumen infolge von Wärmeeinwirkung entsprechend vergrößert. Der Schottkasten (4) besitzt auf beiden Seiten der Wandöffnung (2) eine die Durchführungsöffnung (7) freilassende, feststehende Stirnwand (8) und bildet zwischen den Stirnwänden (8) eine zur Durchführungsöffnung (7) hin offene Aufnahme (9). In dieser Aufnahme (9) ist ein das Intumeszenzmaterial (14) enthaltender Schottkörper (10) beweglich geführt. Eine Halteeinrichtung (12) hält den Schottkörper (10) in der Aufnahme (9) fest und gibt erst im Brandfall seine Bewegung aus der Aufnahme (9) in die Durchführungsöffnung (7) frei.

## Beschreibung

Die Erfindung betrifft eine Vorrichtung zur Brandabschottung einer Wandöffnung für die Durchführung von Leitungen, wie elektrische Kabel, Rohre oder dergl., durch eine Wand, mit einem abgedichtet gegen die Wand in der Wandöffnung angeordneten, die Leitungen in einer Durchführungsöffnung aufnehmenden Schottkasten, in dem sich ein Intumeszenzmaterial befindet, das die Durchführungsöffnung erst im Brandfall ausfüllt und dabei sein ursprüngliches Volumen infolge von Wärmeeinwirkung entsprechend vergrößert.

Vorrichtungen dieser Art besitzen den Vorteil, daß sich die Durchführungsöffnung erst im Brandfall schließt, vorher aber immer offen ist, und daß daher Änderungen oder Ergänzungen in der Leitungsbelegung der Durchführungsöffnung ohne Bohr- oder Stemmarbeiten an der Wand oder am Schottkasten vorgenommen werden können.

Bei bekannten Vorrichtungen dieser Art (vgl. beispielsweise die Firmendruckschrift der Asea Brown Boveri AG "Schottung von Wand- und Deckendurchbrüchen", ABB - ZST 31 (12.88 1000 HD) Seite 5) ist der Schottkasten ein auf beiden Seiten der Wand offener Stahlblechkasten, dessen Wände innenseitig mit aus dem Intumeszenzmaterial bestehenden Blöcken, nämlich luftdicht gekapselten PALUSOL-Blöcken, ausgekleidet sind, die zwischen sich die Durchführungsöffnung bilden. Stirnseitig befinden sich am Schottkasten Polystyrol-Kappen, die mit passenden Öffnungen für die einzelnen Leitungen versehen und mit einem geeigneten dauerelastischen Dichtstoff gegen den Schottkasten und gegen die Leitungen verfugt werden müssen. Unter Wärmeeinwirkung im Brandfall schäumt das Intumeszenzmaterial auf und verschließt dadurch die nach der Leitungsbelegung noch frei gebliebenen Teile der Durchführungsöffnung. Die Polystyrol-Kappen entfalten im Brandfall keine nennenswerte Brandschutzwirkung; sie dienen nur zum zug- und rauchdichten Verschluß der Durchführungsöffnung, so lange sie vor einem Brandfall durch das Intumeszenzmaterial noch nicht verschlossen ist.

Der Einsatzbereich dieser bekannten Vorrichtungen ist beschränkt. Der Schottkasten kann im Innenmaß seines Querschnitts nicht nennenswert größer als etwa 70 x 240 mm sein, weil sonst die Menge des Intumeszenzmaterials, die im Schottkasten untergebracht werden kann, nicht ausreichen würde, um im Brandfall die Durchführungsöffnung wirklich zuverlässig zu schließen.

Der Erfindung liegt die Aufgabe zugrunde, eine Vorrichtung der eingangs genannten Art so auszubilden, daß auch bei größeren und großen Querschnittsinnenmaßen der Durchführungsöffnung genügende Mengen an Intumeszenzmaterial zur Verfügung stehen, um im Brandfall den sicheren Verschluß der Durchführungsöffnung zu gewährleisten.

Diese Aufgabe wird nach der Erfindung dadurch gelöst, daß der Schottkasten auf beiden Seiten der Wandöffnung eine die Durchführungsöffnung freilassende, feststehende Stirnwand aufweist und zwischen den Stirnwänden eine zur Durchführungsöffnung hin offene Aufnahme bildet, daß in dieser Aufnahme ein das Intumeszenzmaterial enthaltender Schottkörper beweglich geführt und von einer in Führungsrichtung wirkenden Antriebskraft beaufschlagt ist und daß eine Halteeinrichtung vorgesehen ist, die den Schottkörper gegen die Wirkung der Antriebskraft in der Aufnahme festhält und erst im Brandfall seine Bewegung aus der Aufnahme in die Durchführungsöffnung freigibt.

Im Ergebnis beinhaltet der Schottkörper bei der erfindungsgemäßen Vorrichtung einen zusätzlichen Vorrat an Intumeszenzmaterial, der sich in der Aufnahme außerhalb der Durchführungsöffnung befindet und daher auch bei größerem Schottkörper die Größe des für die Leitungsbelegung zur Verfügung stehenden Innenquerschnitts der Durchführungsöffnung nicht beeinträchtigt. Erst im Brandfall, jedoch noch ehe das Intumeszenzmaterial aufschäumt, bewegt sich der Schottkörper aus der Aufnahme in die Durchführungsöffnung hinein und vergrößert dadurch die in der Durchführungsöffnung zu ihrem Verschluß zur Verfügung stehende Menge an Intumeszenzmaterial, und zwar gleichmäßig verteilt über die gesamte Länge der Durchführungsöffnung.
Vorzugsweise ist die Aufnahme für den Schottkörper oberhalb der Durchführungsöffnung angeordnet und der Schottkörper in der Aufnahme in senkrechter Richtung verschiebbar. Das hat den Vorteil, daß das Gewicht des Schottkörpers seine Bewegung in die Durchführungsöffnung hinein im Sinne einer entsprechenden Antriebskraft bewirkt oder eine schon vorhandene Antriebskraft noch unterstützt. Außerdem paßt sich die Verstellung des Schottkörpers in die Durchführungsöffnung hinein von selbst der jeweiligen Leitungsbelegung an, da diese Verstellung erst dadurch ihr Ende findet, daß sich der Schottkörper mit seiner Unterseite auf die in der Durchführungsöffnung liegenden Leitungen aufsetzt.

Weiter empfiehlt es sich, daß der Schottkörper mit zu den Stirnwänden parallelen, gegen die Stirnwände abgedichtet verschiebbaren Schottwänden versehen ist, die sich auch in der vollständig in die Durchführungsöffnung vorgeschobenen Stellung des Schottkörpers noch teilweise mit den Stirnwänden unter gegenseitiger Abdichtung überlappen. Dadurch wird verhindert, daß die Bewegung des Schottkörpers in die Durchführungsöffnung hinein eine Rauch- oder Brandausbreitung fördernde Undichtigkeiten gegenüber den Stirnwänden und dem Schottkasten erzeugen könnte. Zweckmäßigerweise ist mindestens im Überlappungsbereich zwischen jeder Schottwand und der ihr zugeordneten Stirnwand eine an jeweils einer von beiden Wänden befestigte und an der anderen Wand verschiebbar anliegende Matte aus elastisch verformbarem Dichtungsmaterial vorgesehen, wobei die Matte vorzugsweise aus einem Brandschutz-Schaumstoff besteht.

Eine im Rahmen der Erfindung besonders bevorzugte Ausführungsform ist dadurch gekennzeichnet, daß der Schottkörper als hohles Behältnis ausgebildet ist, das ein aus Feststoff bestehendes Intumeszenzmaterial von schütt- oder rieselfähiger Beschaffenheit enthält, und daß der die Durchführungsöffnung nach oben begrenzende Boden des Behältnisses sich im Brandfall öffnet und das Intumeszenzmaterial in die Durchführungsöffnung austreten läßt, wobei die Öffnung des Bodens schon bei niedrigerer Temperatur als die Volumenvergrößerung des Intumeszenzmaterials erfolgt. Dies ist mit dem großen Vorteil verbunden, daß das schütt- oder rieselfähige Intumeszenzmaterial in alle Zwischenräume zwischen den Leitungen selbst, zwischen diesen und einer sie tragenden Leitungspritsche, sowie zwischen der Leitungspritsche und den Wänden der Durchführungsöffnung gelangen und diese Zwischenräume ausfüllen kann. Wird dann im übrigen entsprechend einem weiteren Vorschlag der Erfindung dafür gesorgt, daß die Menge des Intumeszenzmaterials im Behältnis so groß ist, daß es bei vollständig in die Durchführungsöffnung vorgeschobenem Schottkörper und geöffnetem Boden die Durchführungsöffnung schon vor der Volumenvergrößerung bis mindestens zur Höhe des Bodens ausfüllt, so ergibt sich über die ganze Länge der Durchführungsöffnung hinweg ein rauchdichter Verschluß der Durchführungsöffnung gegen den Schottkörper, und zwar schon dann, wenn das Intumeszenzmaterial noch gar nicht aufgeschäumt ist. Die auf diesem Wege erreichbare Rauchdichtigkeit macht die bei den bekannten Vorrichtungen erforderlichen Polystyrol-Kappen entbehrlich, wodurch sich Änderungen der Leitungsbelegung weiter vereinfachen, weil das Anpassen der Kappen an die geänderte Leitungsbelegung und das neue Verfugen entfallen. Auch ist es möglich, eine Leitungspritsche durch die Durchführungsöffnung hindurchlaufen zu lassen, ohne dadurch den wirksamen Brandabschluß der Durchführungsöffnung im Brandfall zu gefährden. Zweckmäßigerweise besitzt der Schottkörper eine über den Boden nach unten vorstehende Berandung, mit der er sich bei der Verstellung in die Durchführungsöffnung den darin liegenden Leitungen aufsetzen kann. Dabei kann die Berandung an ihrer Unterseite mit Dichtleisten aus einem elastischen Material, insbesondere Brandschutz-Schaumstoff, besetzt sein. Diese Dichtleisten puffern das Aufsetzen des Schottkörpers auf die Leitungen ab und üben eine zusätzliche Dichtwirkung aus. Auf jeden Fall aber gewährleistet bei in die Durchführungsöffnung hinein verstelltem Schottkörper der durch die vorstehende Berandung erzeugte Abstand zwischen den Leitungen und dem Boden des Behältnisses, daß sich das aus dem Behältnis austretende schütt- oder rieselfähige Intumeszenzmaterial in der Durchführungsöffnung über die Leitungen ausbreiten und überall in die erwähnten Zwischenräume eindringen kann. Durch das schütt- oder rieselfähige Intumeszenzmaterial wird im übrigen die im Brandfall in der Durchführungsöffnung zu deren Verschluß zur Verfügung stehende Menge an Intumeszenzmaterial so vergrößert, daß sich Blöcke aus diesem Material, welche die Wände der Durchführungsöffnung auskleiden und den für die Belegung mit Leitungen verfügbaren Öffnungsquerschnitt verringern, überhaupt erübrigen. Das Behältnis kann in der Aufnahme auch nach oben hin offen sein und so viel Intumeszenzmaterial enthalten, daß dieses sich bei seiner Volumenvergrößerung im Brandfall auch nach oben in die Aufnahme hinein ausbreitet und die Aufnahme verschließt. Dann ist ein dichter Brandabschluß auch dann gewährleistet, wenn die Abdichtung zwischen den Stirnwänden des Schottkastens und den Schottwänden des Schottkörpers ungenügend, insbesondere durch die Brandeinwirkung zerstört worden sein sollte.

Das Öffnen des Bodens des Behältnisses im Brandfall kann auf verschiedene Weise, beispielsweise durch Zerstören des Bodens, wie Aufreißen, Aufschneiden oder dergl., erfolgen. Um aber das Öffnen des Bodens genau steuern zu können, sieht die Erfindung als bevorzugte Ausführungsform vor, daß der Boden mit über seine ganze Fläche sieb- oder rasterartig angeordneten Austrittsöffnungen für das schütt- oder rieselfähige Intumeszenzmaterial versehen und zum Schließen und Öffnen der Austrittsöffnungen ein am Schottkörper parallel zum Boden geführtes, aus der Schließstellung in die Offenstellung steuerbares Verschlußorgan vorgesehen ist. Zweckmäßigerweise ist das Verschlußorgan als ein in Führungsrichtung aus der Schließstellung in die Offenstellung von einer Stellkraft beaufschlagter Verschlußschieber mit den Austrittsöffnungen des Bodens zugeordneten entsprechenden Durchtrittsöffnungen ausgebildet und der Verschlußschieber bei in der Aufnahme befindlichem Schottkörper durch einen Anschlag in der Schließstellung gehalten, der sich am Schottkasten befindet und die Bewegung des Verschlußschiebers in die Offenstellung miteinander deckenden Austrittsöffnungen und Durchtrittsöffnungen freigibt, wenn sich der Schottkörper mit dem Verschlußschieber in die Durchtrittsöffnung verstellt. Auf diese Weise ergibt es sich von selbst, daß sich erst der Schottkörper in die Durchführungsöffnung verstellt und dann sich der Boden des Behältnisses öffnet. Dies kann nach einem anderen Vorschlag der Erfindung im wesentlichen auch dadurch erreicht werden, daß das Verschlußorgan von einem im Behältnis auf dessen Boden abgestützten, aus einem im wesentlichen biegeschlaffen und undehnbaren Flächenmaterial bestehenden Verschlußband gebildet ist, das an einer Schottwand oder Seitenwand des Behältnisses aufwärts in die Aufnahme hinein zu einer im Schottkasten fest angeordneten, an der Bewegung des Schottkörpers nicht teilnehmenden Umlenkeinrichtung verläuft, um die es umgelenkt wieder abwärts zur Schottwand oder Seitenwand verläuft und an ihr befestigt ist, so daß beim Absenken des Schottkörpers das Verschlußband vom Boden abgezogen wird und dessen Austrittsöffnungen freigibt. Zweckmäßigerweise besteht das Verschlußband aus zwei in der Mitte des Bodens aneinander stoßenden oder sich etwas überlappenden Bandteilen, die an sich gegenüberliegenden Schott- bzw. Seitenwänden verlaufen und jeweils für sich an einer eigenen Umlenkeinrichtung umgelenkt und an ihrer jeweiligen Schott- bzw. Seitenwand befestigt sind. Der Vorteil des Verschlußbandes besteht im wesentlichen in der zwangsweisen Kopplung der Bewegung des Schottkörpers mit der den Boden öffnenden Bewegung des Verschlußbandes bzw. seiner Bandteile. Das Gewicht des mit dem Intumeszenzmaerial gefüllten Schottkörper genügt, das Verschlußband zuverlässig vom Boden abzuziehen.

Vorzugsweise ist die Halteeinrichtung durch den Schottkörper durch Brandmelder, die auf Wärme und/oder Rauch ansprechen, steuerbar. Besonders vorteilhaft ist dabei eine Anordnung, bei der die Halteeinrichtung aus am Schottkasten angeordneten, elektrisch versorgten Haftmagneten und aus am Schottkörper angeordneten Haftgegenplatten besteht, wobei im Versorgungskreis der Haftmagnete ein elektrischer Schalter liegt, der durch die Brandmelder steuerbar ist. Der elektrische Schalter kann über elektrische Leitungen durch entfernt vom Schottkasten angeordnete Brandmelder, insbsondere in der Ausführungsform von Rauchmeldern, gesteuert werden, was die Anordnung der Brandmelder an beliebigen, insbesondere auch besonders gefährdeten Orten der durch die Wand begrenzten Räumlichkeiten ermöglicht. Statt dessen oder auch ergänzend können an den Stirnwänden des Schottkastens Brandmelder angeordnet sein, die einen sich in der Wärme ausdehnenden Stoff enthalten, durch dessen Ausdehnung mechanische Stellglieder betätigt werden, die den am Schottkasten angeordneten elektrischen Schalter steuern. Die Stellglieder können in einer anderen zweckmäßigen Ausführungsform statt den elektrischen Schalter einen oder mehrere Riegel einer die Halteeinrichtung bildenden mechanischen Riegelvorrichtung betätigen, wobei die am SChottkasten geführten Riegel im am Schottkörper vorgesehene Riegelaufnahmen fassen.

In weiterer vorteilhafter Ausführungsform der Erfindung sind an den Stirnwänden des Schottkastens nach unten in die Durchführungsöffnung hängende Schürzen vorgesehen, die mit dem unteren freien Rand auf den Leitungen liegen, und die die Durchführungsöffnung in Leitungsrichtung nach außen abdecken. Diese Schürzen ergeben in einfacher Weise Zugfreiheit der Vorrichtung, so lange die Durchführungsöffnung nicht ausgefüllt ist und der Schottkörper sich in der Aufnahme befindet. Zweckmäßigerweise sind die Schürzen im Bereich ihres den Leitungen aufliegenden Randes einwärts in die Durchführungsöffnung hinein gebogen, wodurch sie dazu beitragen, das in die Durchführungsöffnung eingetretene schütt- oder rieselfähige Intumeszenzmaterial daran zu hindern, aus der Durchführungsöffnung stirnseitig in Leitungslängsrichtung auszulaufen und für die Brandabdichtung verloren zu gehen. Auch empfiehlt es sich, die Schürzen an den Stirnwänden in Gelenken zu halten, in denen die Schürzen nach außen und aufwärts gegen die Stirnwände verschwenkbar sind, in welcher Stellung sie beispielsweise eingerastet werden können, damit sie nicht stören, während Belegungsarbeiten in der Durchführungsöffnung stattfinden. Die Schürzen bestehen vorteilhaft aus Glasvlies, Glasgewebe oder aus einem Kupferdrahtgewebe, wobei letzteres mit dem Vorteil eines besonders wirksamen Flammenschutzes und rascher Wärmeableitung verbunden ist. Im übrigen können die Schürzen an ihrem unteren Rand Fransen tragen, die zwischen die Leitungen fallen und dadurch die Abdeckung und Zugfreiheit weiter verbessert.

Das schütt- oder rieselfähige Intumeszenzmaerial im Behältnis des Schottkörpers kann Siliziumdioxid SiO₂ und eine Beimischung aus Aluminiumhydroxid Al(OH)₃ enthalten. Das Intumeszenzmaterial im Behältnis kann aus mehreren, bei ihrer Mischung miteinander aufschäumenden Stoffkomponenten bestehen, für die im Behältnis voneinander abgeteilte Kammern ausgebildet sind, so daß sich die Stoffkomponenten erst beim Austritt aus dem Behältnis in die Durchführungsöffnung miteinander mischen können. Der Schottkörper einschließlich Seitenwänden, der Boden des Behältnisses, der Verschlußschieber und dergl. sind zweckmäßigerweise als harte Formteile aus in der Hitze aufschäumendem Brandschutzmaterial ausgebildet. Gleiches gilt zwar auch für die Schottwände. Jedoch kann es sich für die Schottwände besonders empfehlen, daß die Schottwände aus einem für das Intumeszenzmaterial undurchlässigen Kupferdrahtgewebe bestehen oder an ihrer den Stirnwänden zugewandten Seite mit einem Kupferdrahtgeflecht belegt sind, und zwar wiederum im Hinblick auf den vom Kupferdrahtgewebe geleiteten Flammenschutz und Wärmeabtransport. Auch hier kann im übrigen das Kupferdrahtgeflecht an seinem unteren Rand Fransen tragen, die bei sich absenkendem Schottkörper zwischen die Leitungen fallen und die Abdichtung verbessern. Weiter empfiehlt es sich, daß der Schottkasten aus einem Werkstoff auf der Basis von Calciumsilikat besteht. Dabei können die Stirnwände des Schottkastens an der Außenseite mit einem Hitzeschild, insbesondere aus Aluminiumfolie, belegt sein. Im übrigen ist zweckmäßigerweise der Schottkasten gegen die Wand durch zwischen beiden angeordnete elastische Matten aus Brandschutz-Schaumstoff abgedichtet.

Im folgenden wird die Erfindung anhand eines in der Zeichnung dargestellten Ausführungsbeispiels näher erläutert; es zeigen:
- Fig. 1: eine Abschottungsvorrichtung in einem senkrechten Schnitt in Leitungslängsrichtung,
- Fig. 2: den Gegenstand der Fig. 1 in einer Vorderansicht, teilweise im Schnitt, und
- Fig. 3 und 4: weitere Ausführungsformen der Abschottungsvorrichtung, jeweils in einer der Fig. 1 entsprechenden Darstellung.

Die in der Zeichnung dargestellten Vorrichtungen dienen zur Brandabschottung einer Wandöffnung 2 für die Durchführung von Leitungen 1, wie elektrische Kabel, Rohre oder dergl., durch eine Wand 3. Die Vorrichtung umfaßt einen gegen die Wand 3 mittels Matten 5 aus Brandschutz-Schaumstoff abgedichteten, in der Wandöffnung 2 angeordneten Schottkasten 4, der über Blöcke 6 aus verdichteter Steinwolle gegen die Unterseite 2.1 der Wandöffnung 2 abgestützt ist. Die Blöcke 6 liegen beidseits der die Leitungen 1 aufnehmenden Durchführungsöffnung 7 an den Seitenflächen 2.2 der Wandöffnung 2. Der Schottkasten 4 besitzt auf beiden Seiten der Wandöffnung 2 eine oberhalb der Durchführungsöffnung 7 angeordnete und sie freilassende feststehende Stirnwand 8. Zwischen diesen Stirnwänden 8 bildet der Schottkasten 4 eine zur Durchführungsöffnung 7 nach unten hin offene Aufnahme 9. In dieser Aufnahme ist ein Schottkörper 10 in senkrechter Richtung verschiebbar geführt und von einer in Führungsrichtung wirkenden Antriebkraft beaufschlagt, wobei diese Antriebskraft aus dem Gewicht des Schottkörpers 10 besteht, aber auch zusätzlich durch in der Zeichnung nicht dargestellte Federn erzeugt werden kann. Der Schottkörper 10 besteht aus und/oder enthält Intumeszenzmaterial, das unter Wärmeeinwirkung im Brandfall aufschäumt und sein ursprünglichen Volumen so vergrößert, daß es die Durchführungsöffnung 7 verschließt und dadurch die Brandausbreitung durch die Durchführungsöffnung 7 hindurch verhindert. Die Vorrichtung umfaßt weiter eine allgemein mit 12 bezeichnete Halteeinrichtung, die den Schottkörper 10 gegen die Wirkung der Antriebskraft in der Aufnahme 9 festhält und erst im Brandfall seine Bewegung aus der Aufnahme 9 in die Durchführungsöffnung 7 freigibt.

Die Durchführungsöffnung 7 ist daher normalerweise für Belegungsarbeiten immer offen. Nur im Brandfall bewegt sich der Schottkörper 10 in die Durchführungsöffnung 7 hinein und führt zu deren Verschluß.

Im einzelnen ist der Schottkörper 10 mit zu den Stirnwänden 8 parallelen, gegen die Stirnwände 8 abgedichteten und an ihnen verschiebbaren Schottwänden 11 versehen. Diese Schottwände 11 überlappen sich auch in der vollständig in die Durchführungsöffnung 7 vorgeschobenen Stellung des Schottkörpers 10 noch teilweise mit den Stirnwänden 8 unter gegenseitiger Abdichtung. Dazu sind mindestens im Überlappungsbereich zwischen jeder Schottwand 11 und der ihr zugeordneten Stirnwand 8 an jeweils einer dieser beiden Wände 8, 11 befestigte Matten 40 aus elastisch verformbarem Dichtungsmaterial vorgesehen, die an der jeweils anderen Wand verschiebbar anliegen. Diese Matten 40 bestehen aus Brandschutz-Schaumstoff. Im Ergebnis verhindern diese Abdichtungen, daß sich bei in die Durchführungsöffnung 7 hinein verstelltem Schottkörper 10 Undichtigkeiten zwischen den Stirnwänden 8 und den Schottwänden 11 ergeben, die eine Umgehung des Schottkörpers 10 durch die Aufnahme 9 des Schottkastens 4 hindurch zur Folge haben könnten.

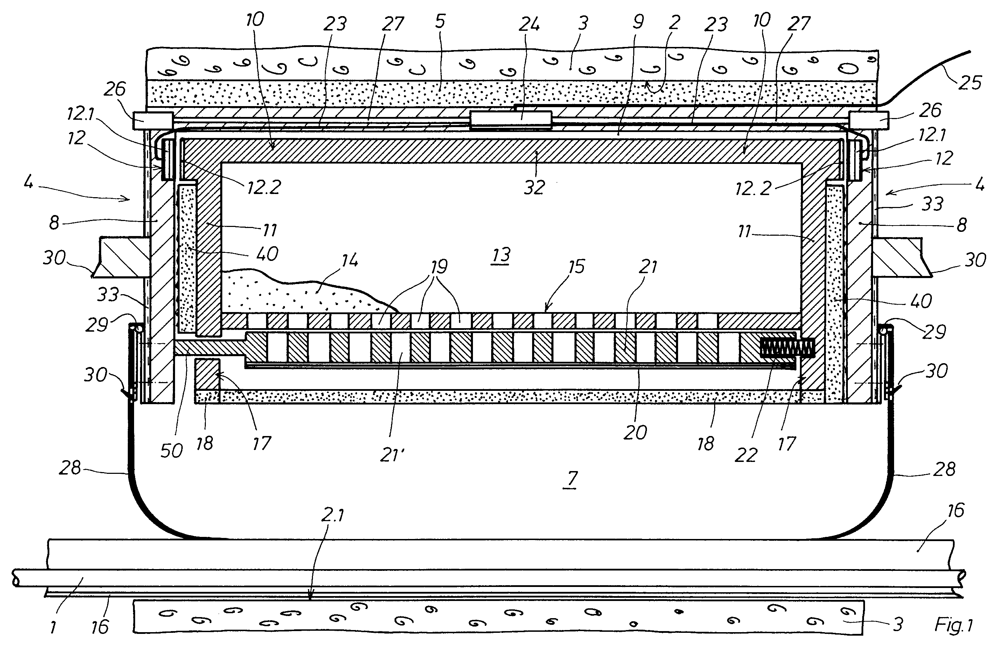

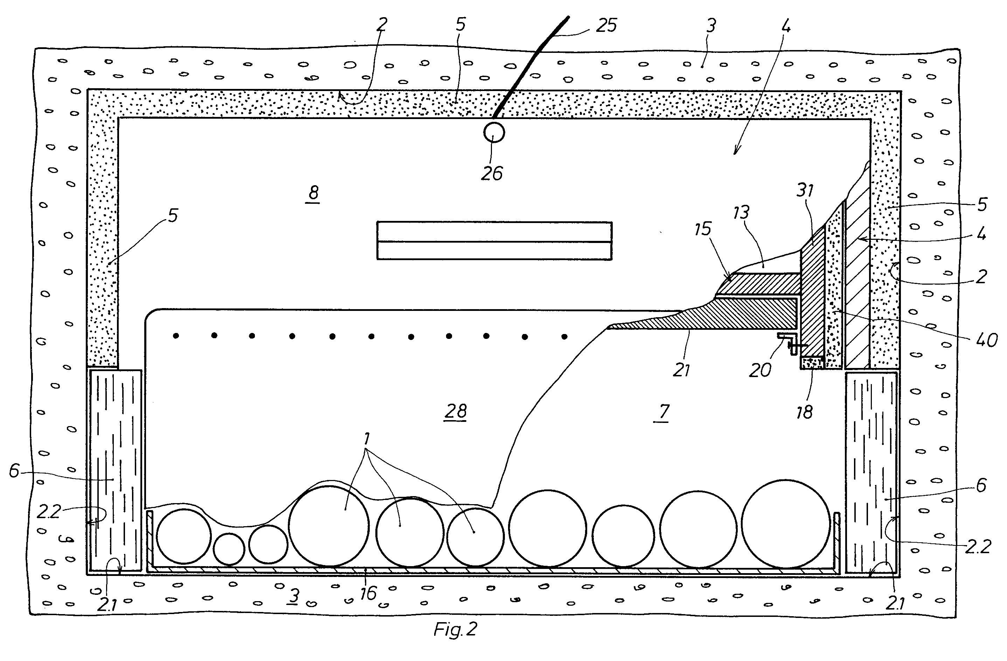

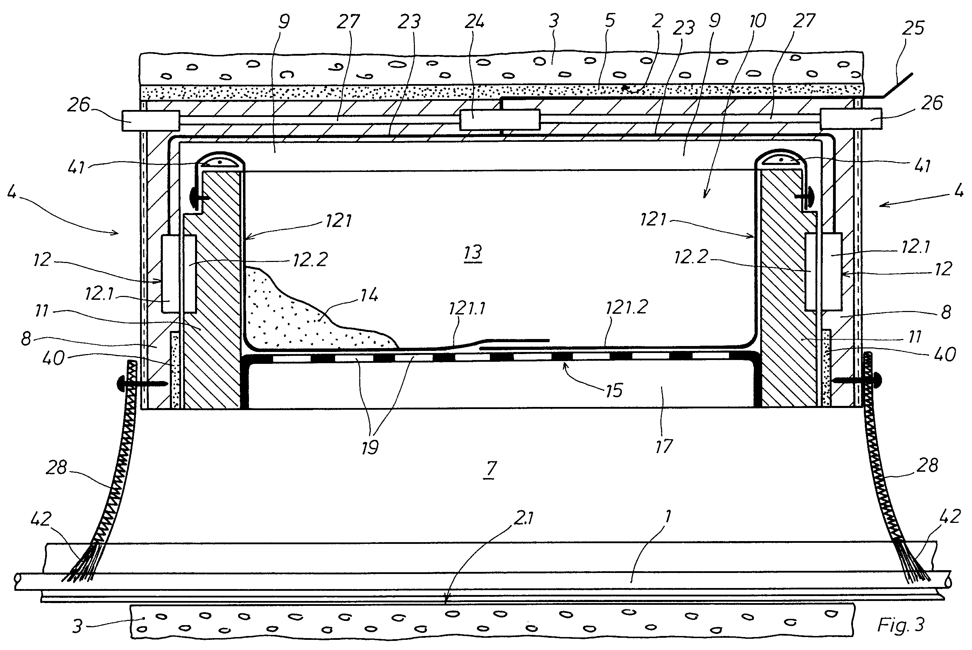

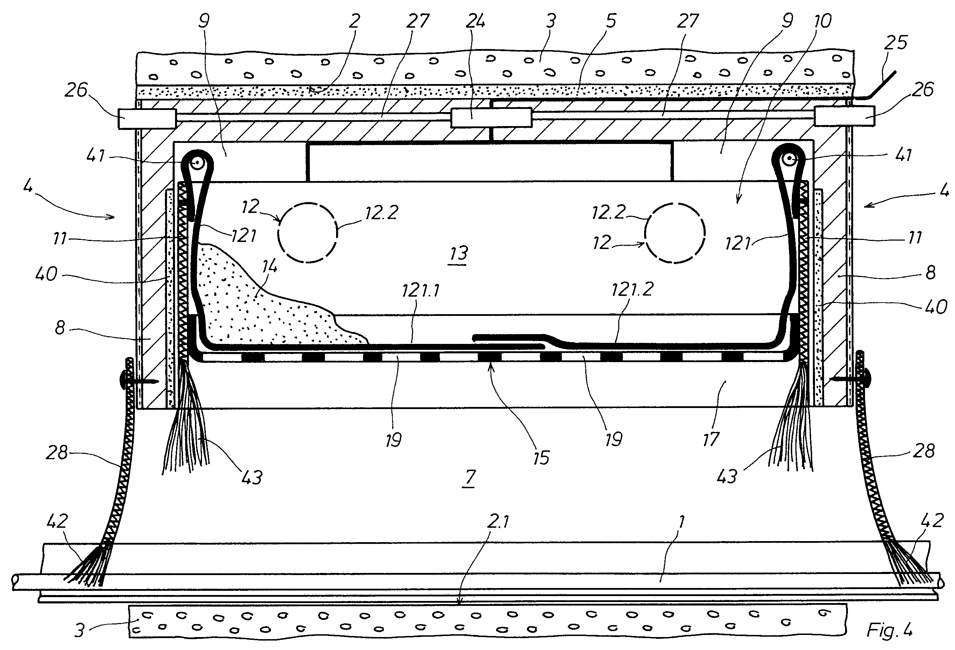

Der Schottkörper 10 selbst ist als hohles Behältnis 13 ausgebildet, das ein aus Feststoff bestehendes Intumeszenzmaterial 14 von schütt- oder rieselfähiger Beschaffenheit enthält, das in der Zeichnung lediglich teilweise und schematisch durch Punktierung angedeutet ist. Der die Durchführungsöffnung 7 nach oben hin begrenzende Boden 15 dieses Behältnisses 13 öffnet sich im Brandfall und läßt das Intumeszenzmaterial 14 nach unten in die Durchführungsöffnung 7 austreten. Dabei erfolgt selbstverständlich die Öffnung des Bodens 15 schon bei niedrigerer Temperatur als die Volumenvergrößerung des Intumeszenzmaterials 14. Die Menge des Intumeszenzmaterials 14 im Behältnis 13 ist so groß, daß es bei vollständig in die Durchführungsöffnung 7 hinein verstelltem Schottkörper 10 und geöffnetem Boden 15 die Durchführungsöffnung 7 schon vor der Volumenvergrößerung bis mindestens zur Höhe des Bodens 15 hin ausfüllt. Dabei gelangt das schütt- oder rieselfähige Intumeszenzmaterial 14 auch in die zwischen den Leitungen 1 bestehenden Zwischenräume, ebenso in die Zwischenräume zwischen einer die Durchführungsöffnung 7 durchsetzenden Leitungspritsche 16 und den Wandflächen 2.1, 2.2 der Wandöffnung 2. Daher ergibt das schütt- oder rieselfähige Intumeszenzmaterial 14 schon vor seinem Aufschäumen einen rauchdichten Verschluß der Durchführungsöffnung 7. Um dieses Eindringen des schütt- und rieselfährigen Intumeszenzmaterials 14 in die erwähnten Zwischenräume zu erleichtern, besitzt der Schottkörper 10 eine über den Boden 15 des Behältnisses 13 nach unten vorstehende Berandung 17, mit der er sich beim Verstellen in die Durchführungsöffnung 7 hinein auf die darin liegenden Leitungen 1 aufsetzen kann. Die Berandung 17 kann, wie in den Fig. 1 und 2 an ihrer Unterseite mit Dichtleisten 18 aus einem elastischen Material, beispielsweise Brandschutz-Schaumstoff, besetzt sein. Der sich somit zwischen den Leitungen 1 einerseits und dem Boden 15 des den Leitungen 1 aufsitzenden Schottkörpers 10 ergebende freie Abstand ermöglicht bei sich öffnendem Boden 15 die gleichmäßige Verteilung des austretenden schütt- oder rieselfähigen Intumeszenzmaterials im gesamten Bereich der Durchführungsöffnung 7. In den Fig. 1 und 2 ist das Behältnis 13 nach oben hin durch eine Deckwand 32 abgeschlossen. In den Fig. 3 und 4 dagegen ist das Behältnis 13 nach oben hin offen. Die Menge des in ihm enthaltenen Intumeszenzmaterial ist so groß vorgesehen, daß es sich bei seiner Volumenvergrößerung im Brandfall auch nach oben in die Aufnahme 9 hinein ausbreitet und die Aufnahme verschließt, wenn sich der Schottkörper 10 abgesenkt und dadurch die Aufnahme 9 teilweise freigegeben hat.

Die gleichmäßige Verteilung des schütt- oder rieselfähigen Intumeszenzmaterials 14 in der Durchführungsöffnung 7 wird weiter noch dadurch gefördert, daß der Boden 15 über seine ganze Fläche mit sieb- oder rasterartig angeordneten Austrittsöffnungen 19 für das Intumeszenzmaterial versehen ist. Zum Schließen und Öffnen der Austrittsöffnungen 19 dient in den Fig. 1 und 2 als Verschlußorgan ein in Laufleisten 20 am Schottkörper 10 parallel zum Boden 15 geführter Verschlußschieber 21, der aus der Schließstellung in die Offenstellung steuerbar ist. Dazu ist der Verschlußschieber 21 mit den Austrittsöffnungen 19 im Boden 15 entsprechenden Durchtrittsöffnungen 21' versehen und durch Federn 22 beaufschlagt, die eine in Führungsrichtung aus der Schließstellung in die Offenstellung des Verschlußschiebers 21 in Fig. 1 nach links gerichtete Stellkraft erzeugen. Gegen diese Stellkraft ist der Verschlußschieber 21 bei in der Aufnahme 9 befindlichem Schottkörper 10 durch einen Anschlag in der Schließstellung gehalten. Dieser Anschlag befindet sich am Schottkasten 4 und gibt die Bewegung des Verschlußschiebers 21 in die Offenstellung erst frei, wenn sich der Schottkörper 10 mit dem Verschlußschieber 21 abwärts in die Durchführungsöffnung 7 verstellt. Im Ausführungsbeispiel ist der Anschlag unmittelbar durch die in Fig. 1 linke Stirnwand 8 des Schottkastens 4 gebildet, der der Verschlußschieber 21 über einen Stößel 50 anliegt. Verstellt sich der Schottkörper 10 in die Durchführungsöffnung 7, gleitet der Stößel 50 von der Stirnwand 8 ab und ermöglicht die Verstellung des Verschlußschiebers 21 in die Offenstellung. - Die Fig. 3 und 4 zeigen dagegen Ausführungsbeispiele, bei welchen das Verschlußorgan von einem im Behältnis 13 auf dessen Boden 15 abgestützten, aus einem im wesentlichen biegeschlaffen und undehnbaren Flächenmaterial bestehenden Verschlußband (121) gebildet ist, das an einer Schottwand 11 des Behältnisses 13 aufwärts in die Aufnahme 9 hinein zu einer im Schottkasten 4 fest angeordneten, an der Bewegung des Schottkörpers 10 nicht teilnehmenden Umlenkeinrichtung 41 verläuft, um die es umgelenkt wieder abwärts zur Schottwand 11 verläuft und an ihr befestigt ist, so daß beim Absenken des Schottkörpers 10 das Verschlußband 121 vom Boden 5 abgezogen wird und dessen Austrittsöffnungen 19 freigibt. Eine besonders zweckmäßige Ausführungsform ist dadurch gekennzeichnet, daß das Verschlußband 121 aus zwei in der Mitte des Bodens 15 aneinander stoßenden oder sich etwa überlappenden Bandteilen 121.1, 121.2 besteht, die an sich gegenüberliegenden Schottwand 11 verlaufen und jeweils für sich an einer eigenen Umlenkeinrichtung 41 umgelenkt und an ihrer jeweiligen Schottwand 11 befestigt sind. In Fig. 3 sind die Umlenkeinrichtungen 41 durch feststehende Umlenkleisten, in Fig. 4 durch drehbar gelagerte Umlenkwalzen gebildet. In jedem Fall liegt die Umlenkung so hoch über dem Boden 15, daß der Weg des Schottkastens 10 bei seiner Absenkung ausreicht, die Bandteile 121.1, 121.2 nach rechts und links vom Boden 15 abzuziehen, so daß alle Austrittsöffnungen 19 freiwerden.

Die Halteeinrichtung 12 für den Schottkörper 10 wird durch Brandmelder gesteuert, die auf Wärme und/oder Rauch ansprechen. Im Ausführungsbeispiel besteht die Halteeinrichtung 12 aus am Schottkasten 4 angeordneten, elektrische versorgten Haftmagneten 12.1 und aus am Schottkörper 10 angeordneten Haftgegenplatten 12.2. Im Versorgungskreis 23 der Haftmagnete 12.1 liegt ein elektrischer Schalter 24, der durch die Brandmelder gesteuert wird. Über diesen elektrischen Schalter 24 können die Haftmagnete 12.1 ein- und ausgeschaltet werden. Sind die Haftmagnete 12.1 eingeschaltet, halten sie die Haftgegenplatten 12.2 und damit den Schottkörper 10 in der Aufnahme 9 fest. Unterbricht der elektrische Schalter 24 die Versorgung der Haftmagnete 12.1, werden die Haftgegenplatten 12.2 freigegeben und der Schottkörper 10 kann sich abwärts in die Durchführungsöffnung 7 verstellen. In der Zeichnung sind zur besseren Übersichtlichkeit zwischen den Haftmagneten 12.1 und den Haftgegenplatten 12.2, wie auch zwischen den Wänden des Schottkastens 4 und den Wänden des Schottkörpers 10 Spalte von übertrieben großer Spaltdicke dargestellt. Soweit solche Spalte in Wirklichkeit überhaupt vorhanden sind, ist ihre Dicke selbstverständlich verhältnismäßig wesentlich geringer. - Im einzelnen können die Brandmelder, insbesondere in der Ausführungsform als Rauchmelder, entfernt vom Schottkasten 4 angeordnet und mit dem elektrischen Schalter 24 über elektrische Leitungen 25 verbunden sein. Zusätzlich sind im Ausführungsbeispiel an den Stirnwänden 8 des Schottkastens 4 weitere Brandmelder 26, insbesondere auf Wärme ansprechende Brandmelder, angeordnet. Diese können einen sich in der Wärme ausdehnenden Stoff enthalten, durch dessen Ausdehnung mechanische Stellglieder 27 betätigt werden, die den am Schottkasten 4 angeordneten elektrischen Schalter 24 steuern. Im Ausführungsbeispiel sind diese mechanischen Stellglieder 27 Schaltstangen oder auch Leitungen für den sich in der Wärme ausdehnenden Stoff, dessen Ausdehnung im Brandfall sich dann unmittelbar am elektrischen Schalter 24 zu dessen Betätigung auswirken kann.

An den Stirnwänden 8 des Schottkastens 4 sind nach unten in die Durchführungsöffnung 7 hängende Schürzen 28 vorgesehen, die mit dem unteren freien Rand auf den Leitungen 1 liegen und die die Durchführungsöffnung 7 in Leitungsrichtung nach außen zugfrei abdecken. Die Schürzen 28 können gemäß Fig. 1 im Bereich ihres den Leitungen 1 aufliegenden Randes einwärts in die Durchführungsöffnung 7 hinein gebogen sein und dadurch dazu beitragen, daß aus dem Schottkörper 10 in die Durchführungsöffnung 7 ausgetretenes schütt- oder rieselfähiges Intumeszenzmaterial 14 nicht stirnseitig in Leitungslängsrichtung aus der Durchführungsöffnung 7 auslaufen und damit für den Verschluß der Durchführungsöffnung 7 verloren gehen kann. Die Schürzen 28 können an den Stirnwänden 8 unbeweglich, wie in den Fig. 3 und 4, oder gemäß Fig. 1 in Gelenken 29 gehalten sein, in denen sie nach außen und aufwärts gegen die Stirnwände 8 verschwenkt werden können. In der hochgeschwenkten Stellung können sie in einem Rastsitz gehalten sein, so daß sie Belegungsarbeiten in der Durchführungsöffnung nicht behindern können. Der Rastsitz kann durch in Fig. 1 angedeutete Rastglieder 30 gebildet sein. Die Schürzen 28 bestehen zweckmäßigerweise aus einem Glasvlies oder aus Glasgeweben mit einer Wärmebeständigkeit bis etwa 500°C, oder aus einem Kupferdrahtgewebe, das besonders geeignet ist, die Durchführungsöffnung 7 vor einem Flammendurchschlag zu schützen. Auch können die Schürzen 28 am unteren Rand Fransen 42 tragen, die bürstenartig zwischen die Leitungen 1 greifen und die Abdichtung noch verbessern.

Das schütt- oder rieselfähige Intumeszenzmaterial 14 im Behältnis 13 des Schottkörpers 10 kann Siliziumdioxid SiO₂ mit einer Beimischung aus Aluminiumhydroxid Al(OH)₃ enthalten. Der Schottkörper 10, der Boden 15 des Behältnisses 13, der Verschlußschieber 21, die Seitenwände 31 und die Deckwand 32 bestehen ebenfalls aus in der Hitze aufschäumendem Brandschutz-Material. Gleiches ist, wie in Fig. 1 bis 3, auch bzeüglich der Schottwände 11 möglich. Jedoch besteht auch die Möglichkeit, daß die Schottwände 11 gemäß Fig. 4 aus einem für das Intumeszenzmaterial 14 undurchlässigen dichten Kupferdrahtgewebe besteht, was im Hinblick auf die hohe Wärmeleistung einer solchen Schottwand und die schon erwähnte Flammensicherheit Vorteile bietet. Auch hier kann das Kupferdrahtgeflecht an seinem unteren Rand Fransen 43 tragen, die bei sich absenkendem Schottkörper 10 zwischen die Leitungen 1 fallen und zusätzlich zur Abdichtung beitragen. Der Schottkasten 4 besteht aus einem Werkstoff auf der Basis von Calciumsilikat. Die Stirnwände 8 sind an der Außenseite mit einem Hitzeschild 33 aus Aluminiumfolie belegt.

## Patentansprüche

1. Vorrichtung zur Brandabschottung einer Wandöffnung (2) für die Durchführung von Leitungen (1), wie elektrische Kabel, Rohre oder dergl., durch eine Wand (3), mit einem abgedichtet gegen die Wand (3) in der Wandöffnung (2) angeordneten, die Leitungen (1) in einer Durchführungsöffnung (7) aufnehmenden Schottkasten (4), in dem sich ein Intumeszenzmaterial befindet, das die Durchführungsöffnung (7) erst im Brandfall ausfüllt und dabei sein ursprüngliches Volumen infolge von Wärmeeinwirkung entsprechend vergrößert, dadurch gekennzeichnet, daß der Schottkasten (4) auf beiden Seiten der Wandöffnung (2) eine die Durchführungsöffnung (7) freilassende, feststehende Stirnwand (8) aufweist und zwischen den Stirnwänden (8) eine zur Durchführungsöffnung (7) hin offene Aufnahme (9) bildet, daß in dieser Aufnahme (9) ein das Intumeszenzmaterial enthaltender Schottkörper (10) beweglich geführt und von einer in Führungsrichtung wirkenden Antriebskraft beaufschlagt ist, und daß eine Halteeinrichtung (12) vorgesehen ist, die den Schottkörper (10) gegen die Wirkung der Antriebskraft in der Aufnahme (9) festhält und erst im Brandfall seine Bewegung aus der Aufnahme (9) in die Durchführungsöffnung (7) freigibt.

2. Vorrichtung nach Anspruch 1, dadurch gekennzeichnet, daß die Aufnahme (9) für den Schottkörper (10) oberhalb der Durchführungsöffnung (7) angeordnet und der Schottkörper (10) in der Aufnahme (9) in senkrechter Richtung verschiebbar ist.

3. Vorrichtung nach Anspruch 2, dadurch gekennzeichnet, daß der Schottkörper (10) mit zu den Stirnwänden (8) parallelen, gegen die Stirnwände (8) abgedichtet verschiebbaren Schottwänden (11) versehen ist, die sich auch in der vollständig in die Durchführungsöffnung (7) vorgeschobenen Stellung des Schottkörpers (10) noch teilweise mit den Stirnwänden (8) unter gegenseitiger Abdichtung überlappen.

4. Vorrichtung nach Anspruch 3, dadurch gekennzeichnet, daß mindestens im Überlappungsbereich zwischen jeder Schottwand (11) und der ihr zugeordneten Stirnwand (8) eine an jweils einer von von beiden Wänden befestigte und an der anderen Wand verschiebbar anliegende Matte (40) aus elastisch verformbarem Dichtungsmaterial vorgesehen ist.

5. Vorrichtung nach Anspruch 4, dadurch gekennzeichnet, daß die Matte (40) aus einem Brandschutz-Schaumstoff besteht.

6. Vorrichtung nach einem der Ansprüche 1 bis 5, dadurch gekennzeichnet, daß der Schottkörper (10) als hohles Behältnis (13) ausgebildet ist, das ein aus Feststoff bestehendes Intumeszenzmaterial (14) von schütt- oder rieselfähiger Beschaffenheit enthält, und daß der die Durchführungsöffnung (7) nach oben begrenzende Boden (15) des Behältnisses (13) sich im Brandfall öffnet und das Intumeszenzmaterial (14) in die Durchführungsöffnung (7) austreten läßt, wobei die Öffnung des Bodens (15) schon bei niedrigerer Temperatur als die Volumenvergrößerung des Intumeszenzmaterials (14) erfolgt.

7. Vorrichtung nach Anspruch 6, dadurch gekennzeichnet, daß die Menge des Intumeszenzmaterials (14) im Behältnis (13) so groß ist, daß es bei vollständig in die Durchführungsöffnung (7) vorgeschobenem Schottkörper (10) und geöffnetem Boden (15) die Durchführungsöffnung (7) schon vor der Volumenvergrößerung bis mindestens zur Höhe des Bodens (15) ausfüllt.

8. Vorrichtung nach Anspruch 6 oder 7, dadurch gekennzeichnet, daß der Schottkörper (10) eine über den Boden (15) nach unten vorstehende Berandung (17) aufweist.

9. Vorrichtung nach Anspruch 8, dadurch gekennzeichnet, daß die Berandung (17) an ihrer Unterseite mit Dichtleisten (18) aus einem elastischen Material, insbesondere Brandschutz-Schaumstoff, besetzt ist.

10. Vorrichtung nach einem der Ansprüche 6 bis 9, dadurch gekennzeichnet, daß das Behältnis (13) in der Aufnahme (9) nach oben hin offen ist und so viel Intumeszenzmaterial enthält, daß dieses sich bei seiner Volumenvergrößerung im Brandfall auch nach oben in die Aufnahme (9) hinein ausbreitet und die Aufnahme (9) verschließt.

11. Vorrichtung nach einem der Ansprüche 6 bis 10, dadurch gekennzeichnet, daß der Boden (15) mit über seine ganze Fläche sieb- oder rasterartig angeordneten Austrittsöffnungen (19) für das schütt- oder rieselfähige Intumeszenzmaterial (14) versehen und zum Schließen und Öffnen der Austrittsöffnungen (19) ein am Schottkörper (10) parallel zum Boden (15) geführtes, aus der Schließstellung in die Offenstellung steuerbares Verschlußorgan (21, 121) vorgesehen ist.

12. Vorrichtung nach Anspruch 11, dadurch gekennzeichnet, daß das Verschlußorgan als ein in Führungsrichtung aus der Schließstellung in die Offenstellung von einer Stellkraft (22) beaufschlagter Verschlußschieber (21) mit den Austrittsöffnungen (19) des Bodens (15) zugeordneten entsprechenden Durchtrittsöffnungen (21') ausgebildet ist, und daß der Verschlußschieber (21) bei in der Aufnahme (9) befindlichem Schottkörper (10) durch einen Anschlag in der Schließstellung gehalten ist, der sich am Schottkasten (4) befindet und die Bewegung des Verschlußschiebers (21) in die Offenstellung mit einander deckenden Austrittsöffnungen (19) und Durchtrittsöffnungen (21') freigibt, wenn sich der Schottkörper (10) mit dem Verschlußschieber (21) in die Durchführungsöffnung (7) verstellt.

13. Vorrichtung nach Anspruch 11, dadurch gekennzeichnet, daß das Verschlußorgan von einem im Behältnis (13) auf dessen Boden (15) abgestützten, aus einem im wesentlichen biegeschlaffen und undehnbaren Flächenmaterial bestehenden Verschlußband (121) gebildet ist, das an einer Schottwand (11) oder Seitenwand (31) des Behältnisses (13) aufwärtsin die Aufnahme (9) hinein zu einer im Schottkasten (4) fest angeordneten, an der Bewegung des Schottkörpers (10) nicht teilnehmenden Umlenkeinrichtung (41) verläuft, um die es umgelenkt wieder abwärts zur Schottwand (11) oder Seitenwand (31) verläuft und an ihr befestigt ist, so daß beim Absenken des Schottkörpers (10) das Verschlußband (121) vom Boden (15) abgezogen wird und dessen Austrittsöffnungen (19) freigibt.

14. Vorrichtung nach Anspruch 13, dadurch gekennzeichnet, daß das Verschlußband (121) aus zwei in der Mitte des Bodens (15) aneinander stoßenden oder sich etwas überlappenden Bandteilen (121.1, 121.2) besteht, die an sich gegenüberliegenden Schott- bzw. Seitenwänden (11, 31) verlaufen und jeweils für sich an einer eigenen Umlenkeinrichtung (41) umgelenkt und an ihrer jeweiligen Schott- bzw. Seitenwand (11, 31) befestigt sind.

15. Vorrichtung nach einem der Ansprüche 1 bis 14, dadurch gekennzeichnet, daß die Halteeinrichtung (12) durch Brandmelder, die auf Wärme und/oder Rauch ansprechen, steuerbar ist.

16. Vorrichtung nach Anspruch 15, dadurch gekennzeichnet, daß die Halteeinrichtung (12) aus am Schottkasten (4) angeordneten, elektrisch versorgten Haftmagneten (12.1) und aus am Schottkörper (10) angeordneten Haftgegenplatten (12.2) besteht, wobei im Versorgungskreis (23) der Haftmagnete (12.1) ein elektrischer Schalter (24) liegt, der durch die Brandmelder steuerbar ist.

17. Vorrichtung nach Anspruch 16, dadurch gekennzeichnet, daß der elektrische Schalter (24) über elektrische Leitungen (25) durch entfernt vom Schottkasten (4) angeordnete Brandmelder, insbesondere Rauchmelder, steuerbar ist.

18. Vorrichtung nach Anspruch 16 oder 17, dadurch gekennzeichnet, daß an den Stirnwänden (8) des Schottkastens (4) Brandmelder (26) angeordnet sind, die einen sich in der Wärme ausdehnenden Stoff enthalten, durch dessen Ausdehnung mechanische Stellglieder (27) betätigt werden, die den am Schottkasten (4) angeordneten elektrischen Schalter (24) steuern.

19. Vorrichtung nach Anspruch 18, dadurch gekennzeichnet, daß die Stellglieder (27) statt den elektrischen Schalter (24) einen oder mehrere Riegel einer die Halteeinrichtung (12) bildenden mechanischen Riegelvorrichtung betätigen, wobei die am Schottkasten (4) geführten Riegel in am Schottkörper (10) vorgesehene Riegelaufnahmen fassen.

20. Vorrichtung nach einem der Ansprüche 1 bis 19, dadurch gekennzeichnet, daß an den Stirnwänden (8) des Schottkastens (4) nach unten in die Durchführungsöffnung (7) hängende Schürzen (28) vorgesehen sind, die mit dem unteren freien Rand auf den Leitungen (1) liegen, und die die Durchführungsöffnung (7) in Leitungsrichtung nach außen abdecken.

21. Vorrichtung nach Anspruch 20, dadurch gekennzeichnet, daß die Schürzen (28) im Bereich ihres den Leitungen (1) aufliegenden Randes einwärts in die Durchführungsöffnung (7) hinein gebogen sind.

22. Vorrichtung nach Anspruch 20 oder 21, dadurch gekennzeichnet, daß die Schürzen (28) an den Stirnwänden (8) in Gelenken (29) gehalten sind, in denen die Schürzen (28) nach außen und aufwärts gegen die Stirnwände (8) verschwenkbar sind.

23. Vorrichtung nach einem der Ansprüche 20 bis 22, dadurch gekennzeichnet, daß die Schürzen (28) aus einem Glasvlies oder Glasgewebe bestehen.

24. Vorrichtung nach einem der Ansprüche 20 bis 22, dadurch gekennzeichnet, daß die Schürzen (28) aus einem Kupferdrahtgewebe bestehen.

25. Vorrichtung nach Anspruch 23 oder 24, dadurch gekennzeichnet, daß die Schürzen (28) an ihrem unteren Rande zwischen die Leitungen (1) fallende Fransen (42) tragen.

26. Vorrichtung nach einem der Ansprüche 6 bis 25, dadurch gekennzeichnet, daß das schütt- oder rieselfähige Intumeszenzmaterial (14) im Behältnis (13) des Schottkörpers (10) Siliziumdioxid SiO₂ und eine Beimischung aus Aluminiumhydroxid Al(OH)₃ enthält.

27. Vorrichtung nach Anspruch 26, dadurch gekennzeichnet, daß das Intumeszenzmaterial (14) aus mehreren, bei ihrer Mischung miteinander aufschäumenden Stoffkomponenten besteht und im Behältnis (13) für die einzelnen Stoffkomponenten voneinander abgeteilte Kammern ausgebildet sind.

28. Vorrichtung nach einem der Ansprüche 1 bis 27, dadurch gekennzeichnet, daß der Schottkörper (10), einschließlich Seitenwänden (31), Boden (15) des Behältnisses (13), Verschlußschieber (21) und dergl., als hartes Formteil aus in der Hitze aufschäumendem Brandschutz-Material ausgebildet ist.

29. Vorrichtung nach einem der Ansprüche 3 bis 28, dadurch gekennzeichnet, daß die Schottwände (1) aus einem für das Intumeszenzmaterial (14) undurchlässigen Kupferdrahtgewebe bestehen oder an ihrer den Stirnwänden (8) zugewandten Seite mit einem Kupferdrahtgeflecht belegt sind.

30. Vorrichtung nach Anspruch 29, dadurch gekennzeichnet, daß das Kupferdrahtgeflecht an seinem unteren Rand Fransen (43) trägt, die bei sich absenkendem Schottkörper (10) zwischen die Leitungen (1) fallen.

31. Vorrichtung nach einem der Ansprüche 1 bis 30, dadurch gekennzeichnet, daß der Schottkasten (4) aus einem Werkstoff auf der Basis von Calciumsilikat besteht.

32. Vorrichtung nach einem der Ansprüche 1 bis 31, dadurch gekennzeichnet, daß die Stirnwände (8) des Schottkastens (4) an der Außenseite mit einem Hitzeschild (33), insbesondere aus Aluminiumfolie, belegt sind.

33. Vorrichtung nach einem der Ansprüche 1 bis 32, dadurch gekennzeichnet, daß der Schottkasten (4) gegen die Wand (3) durch zwischen beiden angeordnete elastische Matten (5) aus Brandschutz-Schaumstoff abgedichtet ist.
